(19) Europäisches Patentamt
European Patent Office
Office européen des brevets

(11) Publication number: **0 361 728 A2**

# (12) EUROPEAN PATENT APPLICATION

(21) Application number: 89309229.6

(22) Date of filing: 12.09.89

(51) Int. Cl.5: C09J 179/08 , C08L 79/08 , //C08G73/10,C09J7/02, (C08L79/08,61:28)

(30) Priority: 26.09.88 US 249150

(43) Date of publication of application: 04.04.90 Bulletin 90/14

(84) Designated Contracting States: AT BE CH DE ES FR GB GR IT LI LU NL SE

(71) Applicant: M & T CHEMICALS, INC.
One Woodbridge Center
Woodbridge, New Jersey 07095(US)

(72) Inventor: Powell, David B.
522 Roxbury Road
Belford N.J. 07718(US)
Inventor: Young, Robert R.
6 Aster Road
Hamilton Square N.J. 08690(US)

(74) Representative: Paget, Hugh Charles Edward et al
MEWBURN ELLIS & CO. 2/3 Cursitor Street
London EC4A 1BQ(GB)

## (54) Adhesive polyimide compositions.

(57) Compositions comprising a blend of 100 parts of a phenol end-capped polyimide, preferably siloxane-modified, with 10 to 80 parts of an aminoplast, preferably an alkoxymethylmelamine. The compositions are suitable for use, with an inert filler if desired, as die attach adhesives. Film form is preferred. The adhesive can be used for attachment at temperatures below 300 °C.

EP 0 361 728 A2

# ADHESIVE POLYIMIDE COMPOSITIONS

This invention relates to adhesive polyimide compositions, and in particular to film die attach adhesives made from them.

In the microelectronics industry there is a need for adhesives that can be processed quickly in addition to having the requisite electrical properties. To this end formulated die-attach adhesives based on glyme solutions of thermoplastic resins, such as, siloxane-modified polyimides were developed to replace the more conventional die-attach adhesives that use thermoset resins as a binder (e.g., epoxies, polyamic acids, bismaleimides and the like). The adhesive is deposited onto the paddle of the lead frame, the die is then placed on top of the adhesive and the solvent quickly removed by means of heat. After solvent removal a strong bond is created at the die/adhesive and paddle/adhesive interfaces. The siloxane-modified polyimide based adhesives require only a short drying cycle to remove solvent whereas the thermosets require long oven cycles to complete the curing and post-curing chemical reactions.

Although solvent-containing siloxane-modified polyimide based systems offer high speed processing, certain problems are encountered. First, the rate of solvent evaporation must be carefully controlled, Prior to deposition on the die bond pad, the solvent must be retained by the paste system. Excessve solvent loss, prior to deposition of the die, can lead to inadequate adhesion. After paste deposition and die placement, it is desirable to remove the solvent from the adhesive as quickly as possible. However, since the bulk of the paste mass is covered by the die, limited surface area is available at the air/paste interface to allow the solvent to escape. In addition, a "skin" may form at the air/paste interface that rapidly changes the drying profile from evaporative (fast and dominated by the vapor pressure of the solvent) to diffusion-controlled drying (slow and dominated by the diffusivity of the solvent through the polymer/filler matrix). All of the above can lead to solvent being retained by the adhesive. This can cause voids to form under the die, if the die is subsequently exposed to high temperatures. Voiding causes failure during thermal cycling due to localized areas of high stress and can also limit heat dissipation from an operating chip. Even if the residual solvent does not result in void formation, it can result in low die shear values because of a plasticizing effect.

The net result of the problems extant, is that solvent-based thermoplastic die attach adhesives have a narrow process latitude and require specialized equipment and training to ensure acceptable performance. In order to avoid the use of solvents, much interest has arisen in the use of dry film or tape die attach adhesives. Here the die attach adhesive is cast from solution onto a substrate and the solvent is removed to form a dry adhesive layer. The adhesive/substrate composite is cut into strips and packaged as a tape or the adhesive can be used as a tape without a substrate. With heat and pressure the dry adhesive can be transferred to the paddle of a lead frame. Then the die can be attached through another heat/pressure step. At this point, die bonding is complete and further time/temperature is not needed since no additional reaction occurs and no solvent is present.

Tape adhesives with a thermoplastic binder used for bonding dice in the assembly of various semiconductor devices must exhibit a hot melt rheology particularly suited to the continuous in-line fabrication of integrated circuits, chip-on-board and other such substrates. For example the adhesive should become tacky at elevated temperatures, wet the die and maintain adequate die shear strength during the subsequent wire bonding process.

If wire bonding at a temperature of 300 °C is desired, the thermoplastic binders for the die attach adhesives must maintain adequate adhesion at this temperature. However in order to bond a die using acceptable pressure , it would be necessary to heat the material well above the Tg (glass transition temperature). This would likely be in the range of 300 to 450 °C. At these temperatures, the standard copper lead frames used in the microelectronics industry would undergo undesirable oxidation.

The problem addressed herein is to provide a new adhesive polyimide composition, which desirably can be used to prepare a die attach adhesive, e.g. in film form usable for die bonding at temperatures below about 300 °C.

Other, preferred, objects are to provide an adhesive capable of maintaining adequate adhesion during overmoulding of a die fixed with it, and to achieve good processability without sacrificing electrical performance.

According to the invention, a composition comprises a blend of 100 parts of a phenol end-capped polyimide with from about 10 to about 80 parts of an aminoplast. Siloxane-modified polyimides are preferred.

It has been found that the rheology of e.g. a siloxane-containing polyimide can be modified by the aminoplast which acts as a reactive diluent.

In other aspects the invention provides die attach adhesives using the compositions, methods of preparing them, and die-attachment processes using them. Preferred phenolic end-capped polyimides can be prepared by the condensation polymerization of a dianhydride, an organic diamine and p-aminophenol. In stoichiometric amounts they afford a polymer having the generic formula:

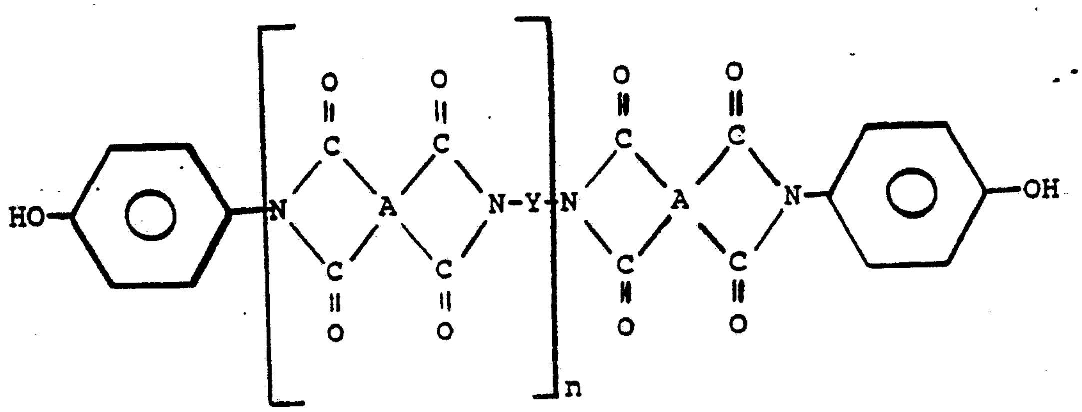

wherein n is an integer having values of 0 to about 200,
A is a tetravalent residue of an aromatic dietherdianhydride having the formula:

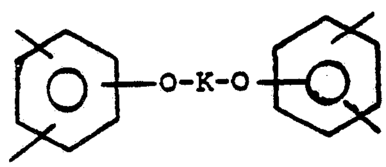

where K is a substituted or unsubstituted group of the formula:

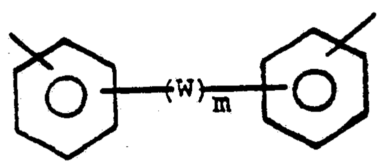

where W is -O-, -S-, -$SO_2$, linear or branched alkylene or alkenylene having 1 to 8 carbons or -(R)C(R)- where R is a lower alkyl or aryl group having 6 to 24 carbon atoms and m is 0 or 1, and Y is one of the following or a mixture thereof:

(a) a divalent residue of an aromatic dietherdiamine having the formula:

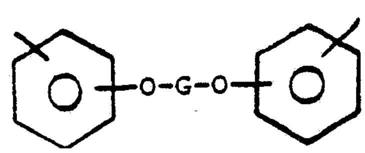

wherein G is a substituted o unsubstituted group of the formula:

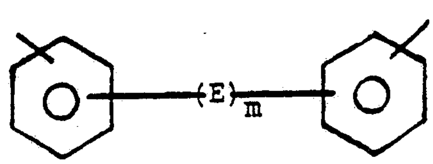

where E is -S-, -$SO_2$-, linear or branched alkenyl or alkenylene of 1 to 8 carbons or -(R)C(Ra)- where R and

Ra can be the same or different lower alkyl or lower alkenyl or substituted or unsubstituted groups of 6 to 24 carbons and m is 0 or 1, and

(b) a divalent residue of a diaminopolysiloxane having the formula:

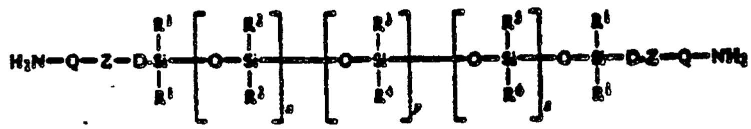

wherein Q is arylene,

Z is a divalent oxygen, sulfide, sulfone, sulfoxide or carboxylic ester or amide group

D is a hydrocarbylene group

$R^1$, $R^2$, $R^3$, $R^4$, $R^5$ and $R^6$ are each alkyl, and

x, y and z are integers having values of 0 to 100.

Preferred compounds are those in which W is S and E is either $-SO_2-$ or -(methyl)C(methyl)-. It is especially preferred that E is -(methyl)C(methyl)- in siloxane-containing polyimides and E is $-SO_2-$ in non-siloxane-containing polyimides.

The presence of p-aminophenol provides the phenol end-caps. For the siloxane-modified polyimides, the molecular weight range can be about 5000 to about 150,000 with a preferred range being about 10,000 to about 100,000.

Preferred aminoplasts are alkoxymethylmelamines, particularly the liquid, hexamethoxymethyl melamine. This is the reaction product of formaldehyde, methanol and melamine. It is commercially available, as RESIMENE 745 and RESIMENE 747 from the Monsanto Chemical Co. Its synthesis and reactions are described in "Polymer Processes" by C.E. Schildknecht, page 300, Interscience Publishers, NYC (1956).

Other alkoxymethylmelamines which can be based include di-, tri-, tetra- and pentaalkoxymethylmelamine. In this series RESIMENE 717, trimethoxymethyl melamine, is a commercially available product where the principal reactive group is $N(H)CH_2OCH_3$. Other aminoplasts useful in this invention are the urea-formaldehyde condensation products, the phenol-aldehyde condensation products and the like.

Interaction of phenol end-capped polyimides and aminoplasts to afford the improved polyimides can generally take place thermally without the need for a catalyst at temperatures in the range of about 135 °C to about 300 °C. A more preferred range is about 140 °C to about 285 °C.

While not wishing to be bound by any theory or technical explanation, it is believed that the presence of the aminoplast renders a die attach adhesive soft enough so that die placement can take place with minimal heat and pressure. Additional heat is then applied to effect cure rapidly rendering the die adhesive softening temperature high enough so that wire bonding and overmolding can be done without a shifting or displacement of the die occurring.

The alkoxymethylmelamines showed good compatability with the siloxane-modified polyimides. The electrical properties of such compositions were excellent in accelerated aging tests.

Embodiments of the invention are described in the examples which follow. All parts and percentages are by weight unless otherwise specified.

## EXAMPLE 1

### Preparation of Phenol End-capped Polyimide

A phenolic end-capped siloxane-modified polyimide was prepared as follows. To a 3 liter round-bottom flask equipped with a stirrer, thermometer, nitrogen inlet tube, reflux condenser, two distillation columns, modified Dean-Stark moisture trap and heating mantle was charged the following:

1017.6 g monochlorobenzene

11.55 g(0.28 moles) 2,2-bis[4-(p-aminophenoxy)phenyl]propane plus 50 g monochlorobenzene

46.87 g(0.053 moles) bis(m-aminophenoxybutyl)hexadecamethyloctasiloxane plus 100 g monochlorobenzene

0.267 g p-aminophenol plus 10 g monochlorobenzene

This mixture was stirred until solution was effected. Then 11.55 g (or 41.62 g) 4,4′-bis(3,4-dicarboxylphenoxy)diphenyl sulfide dianhydride plus 100 g monochlorobenzene and 0.2 g p-toluenesulfonic acid in 10 g monochlorobenzene were added.

This reaction mixture was heated at reflex for 1-2 hours during which time 214.6 g of distillate were topped off. Reflexing was continued for 10 hours. The mixture was allowed to cool to room temperature with stirring. Then 308 g of N-methylpyrrolidone were added with stirring. The resultant polymer, a siloxane containing, phenol end-capped polyimide was precipitated by adding 500 ml of the reaction mixture into 3500 ml of rapidly stirred methanol at room temperature. The precipitated polyimide was allowed to settle and the supernatant liquid siphoned off. The polyimide was suspended again in 2500 ml of fresh methanol and stirred vigorously for 15-20 minutes. The polyimide was again allowed to settle and the supernatant liquid siphoned off. The polyimide was filtered through coarse filter paper using a Buchner funnel, washed with 1000 ml of methanol and dried for about 10 minutes. The polyimide was air dried overnight and then oven dried at 70 °C for 16-24 hours.

## EXAMPLE 2

A conductive die attach adhesive film was prepared using the following procedure: A paste was made by mixing the ingredients listed in the order given:

| | |
|---|---|
| Dow Corning 1400 Antifoam - | 0.26g. |
| A 25% diglyme solution of the phenol end-capped poly(siloxaneimide) prepared in Example 1 - | 35.20g |
| Silflake 299 (a silver flake available commercially from Handy and Harman Co.) | 60.14g |
| Resimene 747 (trademark of Monsanto Chemical Co. for hexamethoxymethylmelamine) | 4.4g |

The ingredients listed above were blended in a double planetary mixer for one hour until a paste was obtained. The paste was then used to prepare a film adhesive. The paste was poured onto a glass plate previously cleaned and sprayed with Miller-Stephenson MS-122 fluorcarbon. A Doctor blade was used to make a wet drawdown 0.20-0.23 nm (8.9 mils) thick. This coating was baked for 6 hours at 50 °C. The coating was then removed from the glass to give a dry film about 0.05 mm (2 mils) in thickness.

Pieces 6.35 x 6.35 mm (0.25" x 0.25") were cut from the film. A piece of this adhesive was adhered to a copper lead frame with a silver-spotted paddle large enough to accommodate a 6.35x6.35mm (250 $mil^2$) die.Adhesion to the leadframe was obtained by placing the film on the paddle and heating for 0.5 seconds at 95 °C on a Kulicke and Soffa Model 648 Manual Eutectic Die Bonder.

A 6.35x6.35 mm (250$mil^2$) die was then adhered to the leadframe with this film die attach adhesive using a single collet head under 200g pressure at 275 °C for 0.5 seconds. Heating was then continued for an additional 0.5 seconds without pressure.

Die shear strength of the adhered die was determined by taking the average value of die shear strength of 10 specimens at both 25 °C and 175 °C. A Hybrid Machine Products Corporation Die Shear Tester was used to make the measurements. A value of 22.8 kg was obtained for the die shear strength at room temperature and a value of 0.17 kg die shear strength was obtained at 175 °C.

## EXAMPLE 3

The film adhesive prepared in Example 2 was also used to bond a die to KAPTON film. The die shear strength obtained was comparable to those for the lead frame in Example 2.

## EXAMPLE 4

Phenol end-capped poly(siloxaneimide) prepared as in Example 1 with the exception that the bis(m-aminophenoxybutyl)hexadecamethyloctasiloxane was replaced with an equivalent amount of bis(p-aminophenylthiobutyl)tetramethyldisiloxane. This product was formulated as in Example 2 to afford a die attach adhesive having similar die shear strengths and comparable utility for die bonding operations.

## Example 5

A conductive die attach adhesive film was prepared using the following procedure. A paste was made by mixing the ingredients in the order given below:

Dow Corning 1400 antifoam additive (0.04g), a diglyme solution of phenol end-capped poly-(siloxaneimide) (75g of a 40% solution), Monsanto Chemical Company's RESIMENE 747 aminoplast (10g), Degussa Aerosil 200 Silica filler (3g), Handy and Harman Silflake 299 (160g) and 30g of diglyme.

The die shear strength of this film was determined using the procedure described in Example 2. A value of 27.0 kg. was obtained for the die shear strength at room temperature.

## CONTROL

A conductive die attach adhesive film was prepared using the following procedure. A paste was made by mixing the ingredients in the order given below:

Dow Corning 1400 antifoam additive (0.026g), a diglyme solution of phenol end-capped poly-(siloxaneimide) (46.6g) of a 25% solution) and Hardy and Harman Siliflake 299 (53.1g).

The procedure described in Example 2 was used to determine the die shear strength of this film. A value of 22.9 kg. was obtained for the die shear strength at room temperature and a value of 0.11 kg. was obtained at 175° C.

In an alternative use of the described compositions, die attach formulations can be coated onto the paddle of a lead frame and dried prior to actual die attach. The dried coating can then be treated as a hot melt die attach during subsequent bonding operations (i.e., heat the coated lead frame prior to bonding.

These compositions can be used in the form of dry tapes, pastes or solutions.

These compositions can also be used in the form of a low temperature laminating adhesive to bond metal foils, such as, copper to substrates including polyethylene terephthalates, polyamides and the like. After a low temperature lamination step, the resultant composite can be given a final cure in an oven or any heat source. Inert fillers such as silica, powdered metals ( silver, gold , etc.), cementitious materials, ceramics ,and the like can be added.

Although the invention has been described with a certain degree of particularity, it will be understood by those skilled in the art that this is done only by way of example and that numerous changes and modifcations can be made.

## Claims

1. Composition comprising a blend of a phenol end-capped polyimide with about 10 to about 80 parts of an aminoplast per 100 parts of polyimide.

2. Composition claimed in claim 1 wherein the polyimide has the formula:

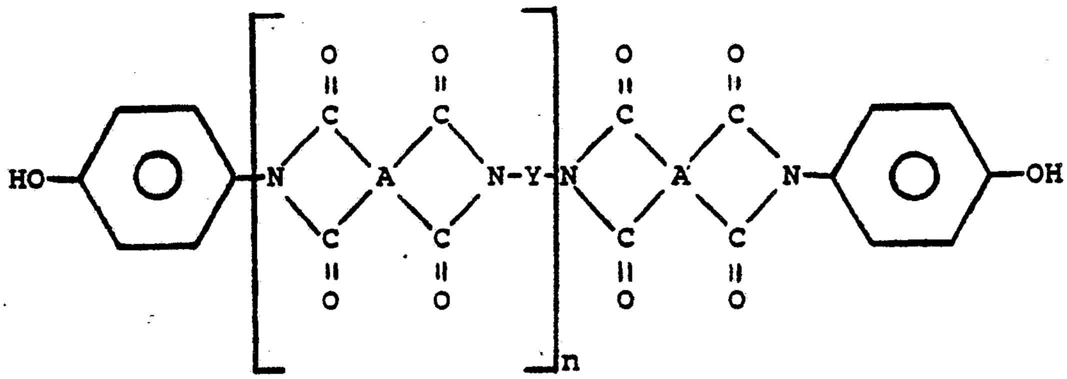

wherein n is an integer having values of 0 to about 200,
A is a tetravalent residue of an aromatic dietherdianhydride having the formula:

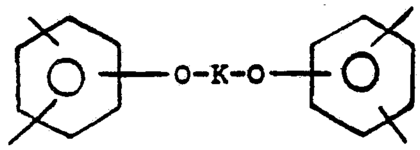

where K is a substituted or unsubstituted group of the formula:

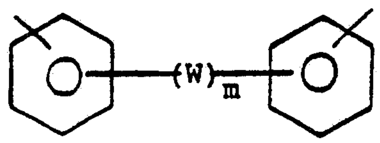

where W is -O-, -S-, $-SO_2$, linear or branched alkylene or alkenylene having 1 to 8 carbons or -(R)C(Ra)- where R and Ra can be the same or different lower alkyl or lower alkenyl or substituted or unsubstituted aryl groups of 6 to 24 carbons amd m is 0 or 1 and Y is one of the following or a mixture thereof:

a) a divalent residue of an aromatic dietherdiamine having the formula:

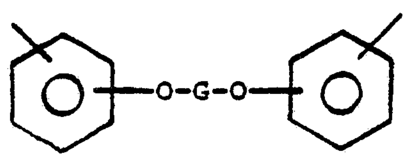

wherein G is a substituted or unsubstituted group of the formula:

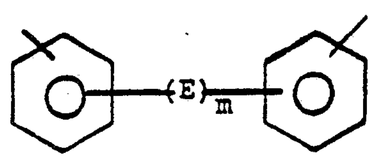

where E is -S-, $-SO_2-$, linear or branched alkenyl or alkenylene of 1 to 8 carbons or -(R)C(Ra)- where R and Ra and m are as defined above, and

(b) a divalent residue of a diaminopolysiloxane having the formula:

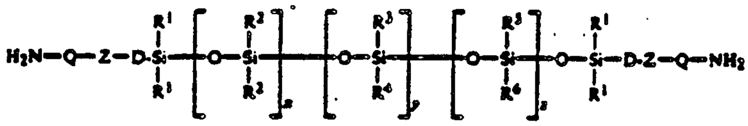

wherein
Q is arylene
Z is a divalent oxygen, sulfide, sulfone, sulfoxide or carboxylic ester or amide group
D is a hydrocarbylene group
$R^1$, $R^2$, $R^3$, $R^4$, $R^5$ and $R^6$ are each alkyl, and
x, y and z are integers having values of 0 to 100.

3. Composition claimed in claim 2 wherein Y is a mixture of (a) and (b).

4. Composition claimed in claim 3 wherein the mole ratio of (a) to (b) is about 10:90 to 90:10.

5. A composition according to any one of claims 2 to 4 wherein the aromatic diether dianhydride is bis-[p-(3,4-dicarboxyphenoxy)phenyl] sulfide dianhydride.

6. A composition according to any one of claims 2 to 5 wherein the aromatic diamine is 4,4′-bis-(p-aminophenoxy)diphenyl sulfone.

7. A composition according to any one of claims 2 to 5 wherein the aromatic diamine is a mixture of 2,2-bis[4-(p-aminophenoxy)phenyl]propane and a diaminopolysiloxane.

8. A composition according to claim 7 wherein the diaminopolysiloxane is bis (m-aminophenoxybutyl) hexadecamethyl-octasiloxane

9. A composition according to any one of claims 2 to 8 wherein n is 10 to 100.

10. A composition according to any one of claims 2 to 9 wherein m is 1.

11. A composition according to any one of the preceding claims wherein the aminoplast is an alkoxymethylmelamine.

12. A composition according to claim 11 wherein the alkoxymethylmelamine is hexamethoxymethylmelamine.

13. A composition according to any one of the preceding claims, further comprising an inert filler, preferably selected from silica, ceramic, and silver.

14. A process comprising preparation of a composition according to any one of claims 1 to 13.

15. A die attach adhesive comprising a composition according to any one of claims 1 to 13.

16. A die attach adhesive according to claim 15, in the form of a film, tape, paste or solution.

17. A process comprising preparation of a die attach adhesive according to claim 15 or claim 16.

18. A method of attaching a die to a substrate, wherein the die is attached to the substrate by an adhesive according to claim 15 or claim 16.

19. A method according to claim 18 wherein the attachment temperature is not more than 300 °C.